# FASCICULE DE BREVET EUROPEEN

(11) **EP 1 468 887 B1**
(45) Date de publication et mention de la délivrance du brevet: **19.08.2009**
(21) Numéro de dépôt: 04300164.3
(22) Date de dépôt: 25.03.2004
(51) Int. Cl.: B60T 7/04

(54) **Procédé pour contrôler la vitesse d'un véhicule automobile, incluant l'élaboration de consignes de freinage anticipées**
Verfahren zur Bedienung der Geschwindigkeit eines Fahrzeuges mit einem Vorgang um Frühbremsen zu bearbeiten
Method for controlling the vehicule speed of a car including a system for early braking

(30) Priorité: 25.03.2003 FR 0303632
(43) Date de publication de la demande: 20.10.2004
(73) Titulaire: RENAULT S.A.S., 92100 Boulogne Billancourt (FR)
(72) Inventeur: Bodin, Pascal, 78280 Guyancourt (FR); Brigout, Christophe, 78730 Saint Arnoult en Yvelines (FR); Chassagnol, Cédric, 92300 Levallois Perret (FR)
(74) Mandataire: Davies, Owen Robert Treharne

(56) Documents cités:
- EP-A- 0 933 269
- DE-A- 10 118 635
- DE-A- 10 160 278
- DE-A- 19 607 048

## Description

L'invention concerne, de façon générale, la sécurité à bord des véhicules automobiles.

Plus précisément, l'invention concerne un procédé pour contrôler la vitesse d'un véhicule automobile doté d'au moins une pédale d'accélérateur et d'une pédale de frein, en fonction au moins de commandes appliquées par un conducteur du véhicule sous la forme de changements d'état de sollicitation desdites pédales, ce procédé comprenant une tâche consistant à identifier, parmi lesdites commandes, des consignes de ralentissement du véhicule, telles qu'un relâchement de la pédale d'accélérateur ou un enfoncement de la pédale de frein, et une tâche consistant à appliquer au véhicule, au cours de chaque phase d'une pluralité de phases de décélération successives, une puissance instantanée de freinage dépendant au moins d'une consigne de ralentissement apparue au cours de cette phase de décélération.

Un procédé de ce type est généralement mis en oeuvre dans les systèmes dits d'assistance au freinage d'urgence (AFU), qui offrent aux conducteurs la possibilité de disposer du maximum des ressources de freinage du véhicule dès qu'une action de freinage révèle une situation d'urgence.

La plupart des systèmes AFU sont mécaniques et offrent une sur-assistance de l'effort de freinage exercé par le conducteur lors du dépassement d'un seuil de vitesse de la course de la pédale de frein, ou lors du dépassement, par le conducteur, d'un seuil de puissance de freinage.

En aidant le conducteur à atteindre et à maintenir à sa valeur maximale le potentiel de freinage du véhicule, de tels systèmes se montrent utiles pour 30 à 60% des actions de freinage d'urgence.

Les procédés les plus avancés, qui proposent d'anticiper le freinage, s'appliquent aux systèmes de freinage découplés, c'est-à-dire aux systèmes dans lesquels la puissance de freinage exercée par le conducteur, ou la course de la pédale de frein, sont exclusivement utilisées pour évaluer la puissance de freinage à appliquer au véhicule, cette dernière étant intégralement délivrée par une source d'énergie autonome embarquée, telle qu'une pompe électro-hydraulique ou un générateur électrique.

Par exemple, le document de brevet DE 10 111 076 décrit un procédé dans lequel une action de freinage est déclenchée dès lors que le relâchement de la pédale d'accélérateur dépasse un seuil de vitesse prédéterminé. Le document DE 19 60 7048 propose un procédé selon le préambule de la revendication 1 du même type, c'est-à-dire dans lequel une action de freinage est engagée après une solicitation de simple ralentissement du véhicule.

La mesure nécessaire à cette action peut provenir d'un capteur tel que décrit dans le document de brevet DE 10 060 498.

Une situation de freinage critique peut aussi être estimée au moyen d'indicateurs non liés à une action directe du conducteur sur les pédales, comme le décrit par exemple le document de brevet DE 19 936 436 qui propose d'utiliser les vitesses des roues et la dérivée de la vitesse du véhicule en tant que paramètres indicateurs d'une situation d'urgence.

L'analyse critique de la situation actuelle, à partir de laquelle s'est développée la réflexion ayant abouti à la présente invention, a révélé que les systèmes AFU mécaniques sont limités par le fait que le seuil à partir duquel une action de freinage est cataloguée comme urgente n'est paramétrable qu'une seule fois, par construction.

D'un autre côté, les procédés d'anticipation les plus avancés mis en oeuvre sur les systèmes de freinage découplés présentent le défaut de ne pas, en fait, exploiter l'ensemble des informations dont ils disposent.

Dans ce contexte, l'invention a pour but de proposer un procédé pour contrôler la vitesse d'un véhicule automobile et permettant, lors d'un freinage, de provoquer l'arrêt du véhicule sur une distance réduite par rapport à celle qu'entraîne la mise en oeuvre de chacun des procédés connus.

A cette fin, le procédé de l'invention, par ailleurs conforme à la définition générique qu'en donne le préambule ci-dessus, est essentiellement caractérisé en ce qu'il comprend une opération de modulation de freinage consistant à moduler la puissance instantanée de freinage appliquée au véhicule, pendant une phase de décélération en cours, en fonction au moins d'un critère d'urgence attribuable à au moins une consigne de ralentissement apparue lors d'une phase de décélération antérieure à la phase de décélération en cours.

L'invention fournit aussi un véhicule automobile pour la mise en oeuvre du procédé suivant la présente invention, et doté d'au moins une pédale d'accélérateur (Pa) et d'une pédale de frein (Pf), ledit véhicule automobile :
- identifiant, parmi des commandes appliquées par un conducteur du véhicule sous la forme de changements d'état de sollicitation (Ka, Kf) desdites pédales, des consignes de ralentissement du véhicule, telles qu'un relâchement de la pédale d'accélérateur (Pa) ou un enfoncement de la pédale de frein (Pf),
- appliquant, au cours de chaque phase d'une pluralité de phases de décélération successives (T0 à T1 ; T1 à T2 ; T2 à T3 ), une puissance instantanée de freinage dépendant au moins d'une consigne de ralentissement apparue au cours de cette phase de décélération (T0 à T1 ; T1 à T2 ; T2 à T3 ), et
- modulant ladite puissance instantanée de freinage, pendant une phase de décélération en cours (T1 à T2 ; T2 à T3 ), en fonction au moins d'un critère d'urgence attribuable à au moins une consigne de ralentissement apparue lors d'une phase de décélération (T0 à T1 ; T1 à T2) antérieure à la phase de décélération en cours.

Il est un avantage de la présente invention qu'une puissance de freinage dépend d'une récente consigne de ralentissement et est modulée en fonction d'une consigne de décélération encore antérieure.

D'autres caractéristiques et avantages de l'invention ressortiront clairement de la description qui en est faite ci-après, à titre indicatif et nullement limitatif, en référence aux dessins annexés, dans lesquels :
- la figure 1 est un diagramme représentant en ordonnée, en fonction du temps indiqué en abscisse, la décélération appliquée à un véhicule au cours de différentes phases successives de ralentissement de ce véhicule lors de la mise en oeuvre d'un procédé conforme à l'invention ; et
- la figure 2 est un schéma représentant symboliquement une architecture fonctionnelle mettant en oeuvre le procédé de l'invention.

Comme indiqué précédemment, l'invention concerne un procédé pour contrôler la vitesse d'un véhicule automobile. Ce véhicule est typiquement doté d'une pédale d'accélérateur Pa et d'une pédale de frein Pf, ces deux pédales étant sélectivement sollicitées par le conducteur du véhicule.

Chaque sollicitation de chacune de ces pédales, qui prend par exemple la forme d'une course d'actionnement Ka de la pédale d'accélérateur Pa, ou d'une course d'actionnement Kf de la pédale de frein Pf, constitue une commande appliquée par le conducteur du véhicule dans le but d'augmenter, de maintenir ou de réduire la vitesse du véhicule.

Le procédé de l'invention s'intéresse plus spécifiquement aux commandes, telles qu'un relâchement de la pédale d'accélérateur Pa ou un enfoncement de la pédale de frein Pf, qui constituent des consignes de ralentissement du véhicule.

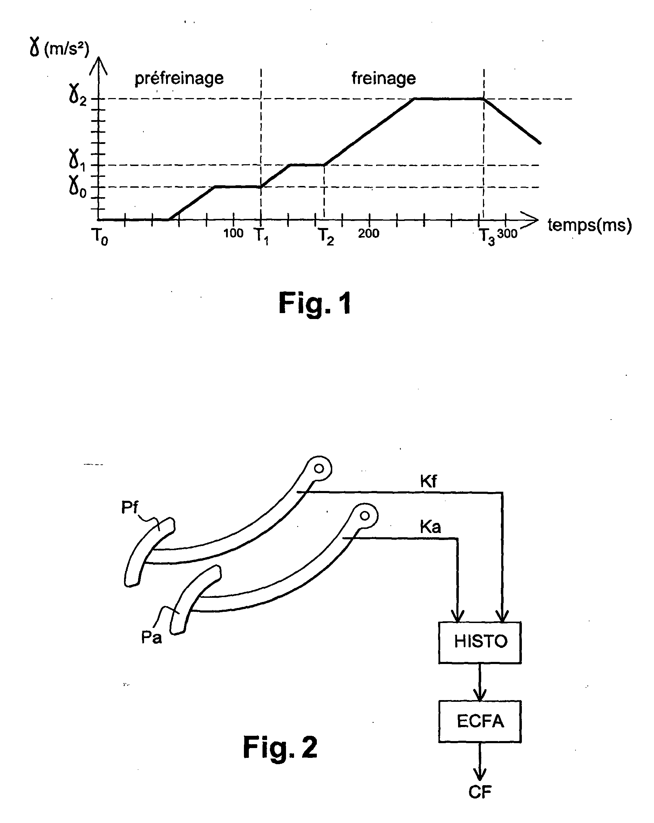

La figure 1 illustre un processus de ralentissement d'un véhicule résultant de l'apparition de plusieurs consignes de ralentissement successives, un tel processus pouvant toujours être découpé en phases dont chacune correspond à l'apparition d'une de ces consignes.

Par exemple, la phase de ralentissement qui s'étend de l'instant T₀ à l'instant T₁ résulte du relâchement de la pédale d'accélérateur Pa à l'instant T₀, tandis que la phase de ralentissement qui s'étend de l'instant T₁ à l'instant T₂ résulte du contact du pied du conducteur avec la pédale de frein Pf à l'instant T₁, et que la phase de ralentissement qui s'étend de l'instant T₂ à l'instant T₃ résulte de l'enfoncement de la pédale de frein Pf par le pied du conducteur à partir de l'instant T₂, cette dernière phase prenant fin par le relâchement de la pédale de frein Pf à l'instant T₃.

De façon connue en soi, le procédé de l'invention comprend une tâche qui consiste à appliquer au véhicule une puissance instantanée de freinage dépendant de chaque consigne de ralentissement nouvellement apparue.

Plus précisément, ce procédé prévoit donc d'appliquer au véhicule, au cours de chacune des phases de décélération successives de T₀ à T₁, de T₁ à T₂, et de T₂ à T₃, une puissance instantanée de freinage qui dépend de la consigne de ralentissement détectée au cours de cette phase de décélération.

Par exemple, le fait pour le conducteur de relâcher la pédale d'accélérateur (instant T₀) conduit, après une temporisation éventuelle et au moins sous certaines conditions, à l'application d'une décélération du véhicule directement liée à ce relâchement.

De même, l'analyse du temps de transfert entre accélérateur et frein conduit à l'application d'une décélération directement liée à ce temps de transfert.

De même, l'urgence définie par la nature de l'enfoncement pédale à l'instant T₂ conduit à l'application d'une décélération du véhicule directement liée à cette urgence.

Cependant, au lieu de se limiter, comme c'est traditionnellement le cas dans l'art antérieur, à ne prendre en compte que la dernière consigne de ralentissement de la façon qui vient d'être décrite, le procédé de l'invention prévoit idéalement d'appliquer au véhicule une décélération qui prend en compte l'historique complet des consignes de ralentissement appartenant à un même processus de décélération du véhicule.

Plus précisément, le procédé de l'invention comprend une opération de modulation de freinage qui consiste à moduler la puissance instantanée de freinage appliquée au véhicule, pendant une phase de décélération en cours, en fonction au moins d'un critère d'urgence attribuable à au moins une consigne de ralentissement apparue lors d'une phase de décélération antérieure à la phase de décélération en cours.

Par exemple, si le procédé de l'invention comprend une opération qui consiste à détecter, en tant que critère d'urgence, la vitesse de relâchement de la pédale d'accélérateur Pa, alors non seulement la décélération γ₀ appliquée au véhicule au cours de la première phase de décélération, qui s'étend de l'instant T₀ à l'instant T₁ et qui est déclenchée par le relâchement de la pédale d'accélérateur Pa, sera d'autant plus forte que la vitesse de relâchement de la pédale d'accélérateur Pa sera élevée, mais en outre la puissance de freinage appliquée au véhicule au cours de la deuxième phase de décélération, qui s'étend de l'instant T₁ à l'instant T₂ et qui est déclenchée par le début de sollicitation de la pédale de frein Pf à l'instant T₁, sera elle-même définie par une loi croissant en fonction de la vitesse de relâchement de la pédale d'accélérateur Pa.

En d'autres termes encore, la décélération γ₁ appliquée au véhicule au cours de la deuxième phase de décélération dépendra donc, dans le cas général, de la décélération γ₀ appliquée au véhicule au cours de la première phase de décélération.

Le procédé de l'invention peut aussi par exemple comprendre une opération qui consiste à détecter, en tant que critère d'urgence, l'intervalle de temps T₁-T₀ séparant le relâchement de la pédale d'accélérateur Pa du début de sollicitation de la pédale de frein Pf.

Dans ce cas, par application du principe général de l'invention, la puissance de freinage appliquée au véhicule lors de la troisième phase de décélération qui s'étend entre les instants T₂ et T₃ sera modulée suivant une loi croissant ou décroissant en fonction de l'intervalle de temps T₁-T₀ séparant le relâchement de la pédale d'accélérateur Pa du début de sollicitation de la pédale de frein Pf.

Autrement dit, la décélération γ₂ appliquée au véhicule au cours de la troisième phase de décélération dépendra donc elle aussi, dans le cas général, de la décélération γ₀ appliquée au véhicule au cours de la première phase de décélération.

Plus généralement, la puissance instantanée de freinage appliquée au véhicule pendant une phase de décélération en cours peut être modulée en fonction d'une combinaison de critères d'urgence respectivement attribuables à des consignes de ralentissement apparues lors de phases de décélération respectives différentes, antérieures à la phase de décélération en cours.

Par exemple, la puissance de freinage appliquée au véhicule lors de la troisième phase de décélération qui s'étend entre les instants T₂ et T₃ pourra notamment dépendre non seulement de la vitesse de relâchement de la pédale d'accélérateur Pa ayant marqué le début de la première phase de décélération, qui s'étend de l'instant T₀ à l'instant T₁, mais cette puissance de freinage pourra aussi dépendre de l'intervalle de temps T₁-T₀ séparant le relâchement de la pédale d'accélérateur Pa du début de sollicitation de la pédale de frein Pf et déjà pris en compte lors de la deuxième phase de décélération qui s'étend entre les instants T₁ et T₂.

En pratique, une décélération différentielle pourra être affectée à chaque consigne de ralentissement, la décélération totale imprimée au véhicule au cours d'une phase de ralentissement en cours pouvant correspondre au cumul des décélérations différentielles affectées aux différentes consignes de ralentissement apparues depuis le début du processus global de ralentissement en cours.

Ainsi, la puissance de freinage peut être modulée, au moins lors de la phase de décélération subséquente au relâchement de la pédale d'accélérateur Pa, pour imprimer au véhicule un surplus de décélération compris entre 0.5 et 3 m/s² (par exemple) lorsque la vitesse de relâchement de la pédale d'accélérateur Pa est au moins supérieure à 400 mm/s (par exemple).

De même, la puissance de freinage peut être modulée, au moins lors de la phase de décélération subséquente au début de sollicitation de la pédale de frein Pf, pour imprimer au véhicule un surplus de décélération compris entre 0.5 et 2 m/s² (par exemple) lorsque l'intervalle de temps T₁-T₀ séparant le relâchement de la pédale d'accélérateur Pa du début de sollicitation de la pédale de frein Pf est au moins inférieur à 200 ms (par exemple).

Le but premier de l'invention étant d'augmenter la sécurité des véhicules par réduction des distances d'arrêt dans tous les cas où le véhicule doit être ralenti en vue, au moins potentiellement, de son arrêt complet, la modulation de puissance de freinage telle qu'elle a été évoquée jusqu'à présent s'inscrit prioritairement dans cet objectif d'immobilisation du véhicule.

Néanmoins, un autre intérêt majeur du procédé de l'invention est de réduire le taux des fausses alarmes qui peuvent apparaître dans le cas où les premières consignes de ralentissement émises par le conducteur semblent traduire un projet de décélération intense du véhicule, dont les consignes ultérieures montrent qu'il a finalement été abandonné, et de réduire les conséquences de telles fausses alarmes sur le confort de conduite.

En effet, dans la mesure où le procédé de l'invention s'attache à prendre en compte non pas des consignes de décélération considérées isolément, mais un historique de consignes porteur d'informations d'autant plus précises sur la finalité réellement poursuivie par le conducteur que cet historique est riche de consignes propres à confirmer ou infirmer totalement ou partiellement la ou les consignes précédentes, ce procédé peut non seulement donner d'autant plus d'importance aux consignes intervenant dans un historique déjà riche qu'elles viennent confirmer, mais aussi inhiber la prise en compte de consignes antérieures modérément fiables, qu'une consigne plus récente vient contredire de façon formelle.

Ainsi, par exemple, la puissance de freinage appliquée au véhicule au début de la sollicitation de la pédale de frein Pf peut être maintenue à zéro ou ramenée à zéro lorsque l'intervalle de temps T₁-T₀ séparant le relâchement de la pédale d'accélérateur Pa du début de sollicitation de la pédale de frein Pf atteint ou dépasse 300 ms, un tel intervalle de temps étant révélateur d'une absence d'urgence.

Le procédé de l'invention peut inclure une sur-assistance de freinage. Par exemple, la puissance de freinage appliquée au véhicule, lors d'une phase de décélération concomitante à un enfoncement de la pédale de frein Pf, peut être augmentée lorsque la puissance transmise par le conducteur à la pédale de frein Pf atteint au moins 25 W.

Une telle sur-assistance peut cependant aussi être conditionnelle. Par exemple, il est possible de prévoir que la puissance de freinage appliquée au véhicule lors de la phase de décélération concomitante à un enfoncement de la pédale de frein Pf ne soit augmentée que lorsque la puissance transmise par le conducteur à la pédale de frein Pf dépasse 25 W pendant au moins 10 ms, et de préférence pendant au moins 20 ms.

Pour réduire encore le risque de fausses alarmes, le procédé de l'invention peut aussi prendre en compte la vitesse du véhicule. Plus précisément, la puissance instantanée de freinage appliquée au véhicule pendant une phase de décélération en cours, et modulée en fonction au moins d'un critère d'urgence, peut également varier suivant une fonction croissante de la vitesse du véhicule.

Il est ainsi possible, par exemple, de diminuer les décélérations différentielles appliquées à basse vitesse pour tenir compte du fait que la pédale de frein est généralement actionnée beaucoup plus rapidement lors de trajets urbains que sur la route.

Le procédé de l'invention, qui est particulièrement bien adapté au cas des systèmes de freinage découplés, encore appelés à commande par fil et plus connus sous le terme anglo-saxon correspondant de "Brake by Wire", permet un gain en distance d'arrêt de l'ordre de 2 à 8% suivant les stratégies adoptées.

De même, le procédé de l'invention peut s'appliquer aux systèmes incluant une source de puissance autonome (freinage à assistance hydraulique ou électrique PAB, OHB, PBC).

La figure 2 illustre, de façon symbolique, une architecture fonctionnelle propre à mettre en oeuvre le procédé de l'invention. Comme le montre cette figure, les consignes que représentent d'une part la mesure Ka de la course de la pédale d'accélérateur Pa et la mesure Kf de course de la pédale de frein Pf sont prises en compte par un module HISTO, qui a pour fonction de traiter ces mesures et d'en interpréter l'historique.

L'information fournie par ce module HISTO est transmise à un module d'élaboration de consignes de freinage anticipées ECFA, qui a lui-même pour fonction d'élaborer des signaux CF de commande de freinage à destination du système de freinage du véhicule.

## Revendications

1. Procédé pour contrôler la vitesse d'un véhicule automobile doté d'au moins une pédale d'accélérateur (Pa) et d'une pédale de frein (Pf), en fonction au moins de commandes appliquées par un conducteur du véhicule sous la forme de changements d'état de sollicitation (Ka, Kf) des dites pédales, ce procédé comprenant une tâche consistant à identifier, parmi lesdites commandes, des consignes de ralentissement du véhicule, telles qu'un relâchement de la pédale d'accélérateur (Pa) ou un enfoncement de la pédale de frein (Pf), et une tâche consistant à appliquer au véhicule, au cours de chaque phase d'une pluralité de phases de décélération successives (T₀ à T₁ ; T₁ à T₂ ; T₂ à T₃) dont chacune est engendrée par une consigne de ralentissement correspondante, une puissance instantanée de freinage dépendant au moins de la consigne de ralentissement engendrant cette phase de décélération (T₀ à T₁ ; T₁ à T₂ ; T₂ à T₃), **caractérisé en ce qu'**il comprend une opération de modulation de freinage consistant à moduler la puissance instantanée de freinage appliquée au véhicule, pendant une phase de décélaration en cours (T₁ à T₂; T₂ à T₃), en fonction au moins d'un critère d'urgence attribuable à au moins une consigne de ralentissement antérieure ayant engendré une phase de décélération (T₀ à T₁ ; T₁ à T₂), antérieure à la phase de décélération en cours (T₁ à T₂ ; T₂ à T₃).

2. Procédé suivant la revendication 1, **caractérisé en ce qu'**il comprend une opération consistant à détecter, en tant que critère d'urgence, une vitesse de relâchement de la pédale d'accélérateur (Pa), et **en ce que** la puissance de freinage est modulée, au moins lors d'une phase de décélération subséquente au relâchement de la pédale d'accélérateur (Pa), suivant une loi croissant en fonction de la vitesse de relâchement de la pédale d'accélérateur (Pa).

3. Procédé suivant la revendication 1 ou 2, **caractérisé en ce qu'**il comprend une opération consistant à détecter, en tant que critère d'urgence, un intervalle de temps (T₁-T₀) séparant un relâchement de la pédale d'accélérateur (Pa) d'un début de sollicitation de la pédale de frein (Pf), et **en ce que** la puissance de freinage est modulée, au moins lors d'une phase de décélération (T₁ à T₂; T₂ à T₃) subséquente au début de sollicitation de la pédale de frein (Pf), suivant une loi croissant ou décroissant en fonction de l'intervalle de temps (T₁-T₀) séparant le relâchement de la pédale d'accélérateur (Pa) du début de sollicitation de la pédale de frein (Pf).

4. Procédé suivant l'une quelconque des revendications précédentes, **caractérisé en ce que** la puissance instantanée de freinage appliquée au véhicule est modulée, pendant une phase de décélération en cours (T₂ à T₃), en fonction d'une combinaison de critères d'urgence respectivement attribuables à des consignes de ralentissement apparues lors de phases de décélération respectives différentes (T₀ à T₁; T₁ à T₂), antérieures à la phase de décélération en cours (T₂ à T₃).

5. Procédé suivant l'une quelconque des revendications précédentes combinée à la revendication 2, **caractérisé en ce que** la puissance de freinage est modulée, au moins lors de la phase de décélération subséquente au relâchement de la pédale d'accélérateur (Pa), pour imprimer au véhicule une décélération additionnelle comprise entre 0.5 et 3 m/s² lorsque la vitesse de relâchement de la pédale d'accélérateur (Pa) est au moins supérieure à 400 mm/s.

6. Procédé suivant l'une quelconque des revendications précédentes combinée à la revendication 3, **caractérisé en ce que** la puissance de freinage est modulée, au moins lors de la phase de décélération subséquente au début de sollicitation de la pédale de frein (Pf), pour imprimer au véhicule une décélération additionnelle comprise entre 0.5 et 2 m/s² lorsque l'intervalle de temps (T₁-T₀) séparant le relâchement de la pédale d'accélérateur (Pa) du début de sollicitation de la pédale de frein (Pf) est au moins inférieur à 200 ms.

7. Procédé suivant l'une quelconque des revendications précédentes combinée à la revendication 3, **caractérisé en ce que** la puissance de freinage appliquée au véhicule au début de la sollicitation de la pédale de frein (Pf) est maintenue à zéro ou ramenée à zéro lorsque l'intervalle de temps (T₁-T₀) séparant le relâchement de la pédale d'accélérateur (Pa) du début de sollicitation de la pédale de frein (Pf) atteint ou dépasse 300 ms.

8. Procédé suivant l'une quelconque des revendications précédentes, **caractérisé en ce que** la puissance de freinage appliquée au véhicule, lors d'une phase de décélération concomitante à un enfoncement de la pédale de frein (Pf), est augmentée lorsque la puissance transmise par le conducteur à la pédale de frein (Pf) atteint ou dépasse au moins 25 W.

9. Procédé suivant la revendication 8, **caractérisé en ce que** la puissance de freinage appliquée au véhicule lors de la phase de décélération concomitante à un enfoncement de la pédale de frein (Pf) n'est augmentée que lorsque la puissance transmise par le conducteur à la pédale de frein (Pf) dépasse 25 W pendant au moins 10 ms et de préférence pendant au moins 20 ms.

10. Procédé suivant l'une quelconque des revendications précédentes, **caractérisé en ce que** la puissance instantanée de freinage appliquée au véhicule est fournie par une source de puissance autonome.

11. Véhicule automobile pour la mise en oeuvre du procédé suivant l'une quelconque des revendications 1 à 10, et doté d'au moins une pédale d'accélérateur (Pa) et d'une pédale de frein (Pf), ledit véhicule automobile :
• identifiant, parmi des commandes appliquées par un conducteur du véhicule sous la forme de changements d'état de sollicitation (Ka, Kf) desdites pédales, des consignes de ralentissement du véhicule, telles qu'un relâchement de la pédale d'accélérateur (Pa) ou un enfoncement de la pédale de frein (Pf),
• appliquant, au cours de chaque phase d'une pluralité de phases de décélération successives (T0 à T1 ; T1 à T2 ; T2 à T3 ), une puissance instantanée de freinage dépendant au moins d'une consigne de ralentissement apparue au cours de cette phase de décélération (T0 à T1 ; T1 à T2 ; T2 à T3), et
• modulant ladite puissance instantanée de freinage, pendant une phase de décélération en cours (T1 à T2 ; T2 à T3 ), en fonction au moins d'un critère d'urgence attribuable à au moins une consigne de ralentissement apparue lors d'une phase de décélération (T0 à T1 ; T1 à T2) antérieure à la phase de décélération en cours.

## Claims

1. Method for controlling the speed of a motor vehicle provided with at least one accelerator pedal (Pa) and one brake pedal (Pf), as a function at least of commands applied by a driver of the vehicle in the form of changes of state of action (Ka, Kf) on the said pedals, this method comprising a task that consists in identifying, among the said commands, instructions to slow the vehicle, such as a release of the accelerator pedal (Pa) or depressing the brake pedal (Pf), and a task that consists in applying to the vehicle, during each phase of a plurality of successive deceleration phases (T₀ to T₁; T₁ to T₂; T₂ to T₃), each of which is generated via a corresponding instruction to slow, an instantaneous braking power that is dependent at least on the instruction to slow generating this deceleration phase (T₀ to T₁; T₁ to T₂; T₂ to T₃), **characterized in that** it comprises a braking modulation operation that consists in modulating the instantaneous braking power applied to the vehicle during an on-going deceleration phase (T₁ to T₂; T₂ to T₃) as a function at least of an emergency criterion attributable to at least one earlier instruction to slow that gave rise to a deceleration phase (T₀ to T₁; T₁ to T₂) that preceded the on-going deceleration phase (T₁ to T₂; T₂ to T₃).

2. Method according to Claim 1, **characterized in that** it comprises an operation that consists in detecting, by way of emergency criterion, a rate at which the accelerator pedal (Pa) was released, and **in that** the braking power is modulated, at least during a deceleration phase subsequent to the release of the accelerator pedal (Pa), according to a law that is an increasing function of the rate at which the accelerator pedal (Pa) was released.

3. Method according to Claim 1 or 2, **characterized in that** it comprises an operation that consists in detecting, by way of an emergency criterion, a time interval (T₁-T₀) separating release of the accelerator pedal (Pa) from the start of action on the brake pedal (Pf), and **in that** the braking power is modulated, at least during a deceleration phase (T₁ to T₂; T₂ to T₃) that is subsequent to the start of action on the brake pedal (Pf), according to a law that is an increasing or decreasing function of the time interval (T₁-T₀) separating release of the accelerator pedal (Pa) from the start of action on the brake pedal (Pf).

4. Method according to any one of the preceding claims, **characterized in that** the instantaneous braking power applied to the vehicle is modulated, during an on-going deceleration phase (T₂ to T₃), as a function of a combination of emergency criteria respectively attributable to instructions to slow that appeared during different respective deceleration phases (T₀ to T₁; T₁ to T₂) prior to the on-going deceleration phase (T₂ to T₃).

5. Method according to any one of the preceding claims combined with Claim 2, **characterized in that** the braking power is modulated, at least during the deceleration phase subsequent to the release of the accelerator pedal (Pa), in order to impart to the vehicle an additional deceleration of between 0.5 and 3 m/s² when the rate of release of the accelerator pedal (Pa) is at least greater than 400 mm/s.

6. Method according to any one of the preceding claims combined with Claim 3, **characterized in that** the braking power is modulated, at least during the deceleration phase subsequent to the start of action on the brake pedal (Pf), in order to impart to the vehicle an additional deceleration of between 0.5 and 2 m/s² when the time interval (T₁-T₀) separating release of the accelerator pedal (Pa) from the start of action on the brake pedal (Pf) is at least less than 200 ms.

7. Method according to any one of the preceding claims combined with Claim 3, **characterized in that** the braking power applied to the vehicle at the start of action on the brake pedal (Pf) is kept at 0 or returned to 0 when the time interval (T₁-T₀) separating release of the accelerator pedal (Pa) from the start of action on the brake pedal (Pf) reaches or exceeds 300 ms.

8. Method according to any one of the preceding claims, **characterized in that** the braking power applied to the vehicle during a deceleration phase concomitant with a depression of the brake pedal (Pf) is increased when the power transmitted by the driver to the brake pedal (Pf) reaches or exceeds at least 25 W.

9. Method according to Claim 8, **characterized in that** the braking power applied to the vehicle during the deceleration phase concomitant with a depression of the brake pedal (Pf) is increased only when the power transmitted by the driver to the brake pedal (Pf) exceeds 25 W for at least 10 ms and preferably for at least 20 ms.

10. Method according to any one of the preceding claims, **characterized in that** the instantaneous braking power applied to the vehicle is provided by an autonomous power source.

11. Motor vehicle for implementing the method according to any one of Claims 1 to 10 and provided with at least one accelerator pedal (Pa) and one brake pedal (Pf), the said motor vehicle:
• identifying, from among the commands applied by a driver of the vehicle in the form of changes of state of action (Ka, Kf) on the said pedals, instructions to slow the vehicle, such as a release of the accelerator pedal (Pa) or depression of the brake pedal (Pf),
• applying, during each phase of a plurality of successive deceleration phases (T0 to T1; T1 to T2; T2 to T3), an instantaneous braking power that is dependent at least on an instruction to slow that appeared during this deceleration phase (T0 to T1; T1 to T2; T2 to T3), and
• modulating the said instantaneous braking power during an on-going deceleration phase (T1 to T2; T2 to T3) as a function at least of an emergency criterion attributable to at least one instruction to slow that appeared during a deceleration phase (T0 to T1; T1 to T2) prior to the on-going deceleration phase.

## Patentansprüche

1. Verfahren zur Überwachung der Geschwindigkeit eines Kraftfahrzeugs, das mit mindestens einem Gaspedal (Pa) und mit einem Bremspedal (Pf) versehen ist, in Abhängigkeit mindestens von Steuerungen, die von einem Fahrer des Fahrzeugs in Form von Zustandsänderungen der Beanspruchung (Ka, Kf) der Pedale angewendet werden, wobei dieses Verfahren eine Task, die darin besteht, unter den Steuerungen Anweisungen zur Verlangsamung des Fahrzeugs, wie ein Loslassen des Gaspedals (Pa) oder ein Eindrücken des Bremspedals (Pf), zu identifizieren, und eine Task enthält, die darin besteht, an das Fahrzeug während jeder Phase von mehreren aufeinanderfolgenden Verzögerungsphasen (T₀ bis T₁; T₁ bis T₂; T₂ bis T₃), von denen jede durch eine entsprechende Verlangsamungsanweisung erzeugt wird, eine augenblickliche Bremsleistung anzuwenden, die mindestens von der Verlangsamungsanweisung abhängt, die diese Verzögerungsphase erzeugt (T₀ bis T₁; T₁ bis T₂; T₂ bis T₃), **dadurch gekennzeichnet, dass** es einen Vorgang der Bremsmodulation enthält, der darin besteht, die an das Fahrzeug angewendete augenblickliche Bremsleistung während einer laufenden Verzögerungsphase (T₁ bis T₂; T₂ bis T₃) in Abhängigkeit mindestens von einem Dringlichkeitskriterium zu modulieren, das mindestens einer vorhergehenden Verlangsamungsanweisung zugeordnet werden kann, die eine Verzögerungsphase (T₀ bis T₁; T₁ bis T₂) vor der laufenden Verzögerungsphase (T₁ bis T₂; T₂ bis T₃) erzeugt hat.

2. Verfahren nach Anspruch 1, **dadurch gekennzeichnet, dass** es einen Vorgang enthält, der darin besteht, als Dringlichkeitskriterium eine Loslassgeschwindigkeit des Gaspedals (Pa) zu erfassen, und dass die Bremsleistung mindestens während einer Verzögerungsphase nach dem Loslassen des Gaspedals (Pa) gemäß einem Gesetz moduliert wird, das in Abhängigkeit von der Loslassgeschwindigkeit des Gaspedals (Pa) zunimmt.

3. Verfahren nach Anspruch 1 oder 2, **dadurch gekennzeichnet, dass** es einen Vorgang enthält, der darin besteht, als Dringlichkeitskriterium ein Zeitintervall (T₁-T₀) zu erfassen, das ein Loslassen des Gaspedals (Pa) von einem Beginn der Beanspruchung des Bremspedals (Pf) trennt, und dass die Bremsleistung mindestens während einer Verzögerungsphase (T₁ bis T₂; T₂ bis T₃) nach dem Beginn der Beanspruchung des Bremspedals (Pf) gemäß einem Gesetz moduliert wird, das in Abhängigkeit von dem Zeitintervall (T₁-T₀) zunimmt oder abnimmt, das das Loslassen des Gaspedals (Pa) vom Beginn der Beanspruchung des Bremspedals (Pf) trennt.

4. Verfahren nach einem der vorhergehenden Ansprüche, **dadurch gekennzeichnet, dass** die an das Fahrzeug angewendete augenblickliche Bremsleistung während einer laufenden Verzögerungsphase (T₂ bis T₃) in Abhängigkeit von einer Kombination von Dringlichkeitskriterien moduliert wird, die Verlangsamungsanweisungen zugeordnet werden können, die während unterschiedlichen Verzögerungsphasen (T₀ bis T₁; T₁ bis T₂) vor der laufenden Verzögerungsphase (T₂ bis T₃) aufgetreten sind.

5. Verfahren nach einem der vorhergehenden Ansprüche kombiniert mit Anspruch 2, **dadurch gekennzeichnet, dass** die Bremsleistung mindestens während der auf das Loslassen des Gaspedals (Pa) folgenden Verzögerungsphase moduliert wird, um dem Fahrzeug eine zusätzliche Verzögerung aufzuprägen, die zwischen 0,5 und 3 m/s² liegt, wenn die Loslassgeschwindigkeit des Gaspedals (Pa) mindestens höher ist als 400 mm/s.

6. Verfahren nach einem der vorhergehenden Ansprüche kombiniert mit Anspruch 3, **dadurch gekennzeichnet, dass** die Bremsleistung mindestens während der auf den Beginn der Beanspruchung des Bremspedals (Pf) folgenden Verzögerungsphase moduliert wird, um dem Fahrzeug eine zusätzliche Verzögerung aufzuprägen, die zwischen 0,5 und 2 m/s² liegt, wenn das Zeitintervall (T₁-T₀), das das Loslassen des Gaspedals (Pa) vom Beginn der Beanspruchung des Bremspedals (Pf) trennt, mindestens geringer als 200 ms ist.

7. Verfahren nach einem der vorhergehenden Ansprüche kombiniert mit Anspruch 3, **dadurch gekennzeichnet, dass** die an das Fahrzeug zu Beginn der Beanspruchung des Bremspedals (Pf) angewendete Bremsleistung auf Null gehalten oder auf Null zurückgesetzt wird, wenn das Zeitintervall (T₁-T₀), das das Loslassen des Gaspedals (Pa) vom Beginn der Beanspruchung des Bremspedals (Pf) trennt, 300 ms erreicht oder überschreitet.

8. Verfahren nach einem der vorhergehenden Ansprüche, **dadurch gekennzeichnet, dass** die an das Fahrzeug während der ein Eindrücken des Bremspedals (Pf) begleitenden Verzögerungsphase angewendete Bremsleistung erhöht wird, wenn die vom Fahrer auf das Bremspedal (Pf) übertragene Leistung mindestens 25 W erreicht oder überschreitet.

9. Verfahren nach Anspruch 8, **dadurch gekennzeichnet, dass** die an das Fahrzeug während der ein Eindrücken des Bremspedals (Pf) begleitenden Verzögerungsphase angewendete Bremsleistung angewendete Bremsleistung nur erhöht wird, wenn die vom Fahrer auf das Bremspedal (Pf) übertragene Leistung während mindestens 10 ms und vorzugsweise während mindestens 20 ms 25 W überschreitet.

10. Verfahren nach einem der vorhergehenden Ansprüche, **dadurch gekennzeichnet, dass** die an das Fahrzeug angewendete augenblickliche Bremsleistung von einer autonomen Leistungsquelle geliefert wird.

11. Kraftfahrzeug zur Anwendung des Verfahrens nach einem der Ansprüche 1 bis 10, das mit mindestens einem Gaspedal (Pa) und einem Bremspedal (Pf) ausgestattet ist, wobei das Kraftfahrzeug:
• unter von einem Fahrer des Fahrzeugs in Form von Zustandsänderungen der Beanspruchung (Ka, Kf) der Pedale angewendeten Steuerungen Anweisungen zur Verlangsamung des Fahrzeugs, wie ein Loslassen des Gaspedals (Pa) oder ein Eindrücken des Bremspedals (Pf), identifiziert,
• während jeder Phase von mehreren aufeinanderfolgenden Verzögerungsphasen (T₀ bis T₁; T₁ bis T₂; T₂ bis T₃) eine augenblickliche Bremsleistung anwendet, die mindestens von einer Verlangsamungsanweisung abhängt, die während dieser Verzögerungsphase (T₀ bis T₁; T₁ bis T₂; T₂ bis T₃) aufgetreten ist, und
• die augenblickliche Bremsleistung während einer laufenden Verzögerungsphase (T₁ bis T₂; T₂ bis T₃) in Abhängigkeit von mindestens einem Dringlichkeitskriterium moduliert, das mindestens einer Verlangsamungsanweisung zugeordnet werden kann, die während einer Verzögerungsphase (T₀ bis T₁; T₁ bis T₂) vor der laufenden Verzögerungsphase aufgetreten ist.
